(19) **Europäisches Patentamt**
**European Patent Office**
**Office européen des brevets**

(11) **EP 3 573 010 A1**

(12) **EUROPEAN PATENT APPLICATION**

(43) Date of publication:
**27.11.2019 Bulletin 2019/48**

(51) Int Cl.:
**G06Q 40/04** *(2012.01)*     **G06Q 50/06** *(2012.01)*

(21) Application number: **19173630.5**

(22) Date of filing: **09.05.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.05.2018 JP 2018100059**

(71) Applicant: **Hitachi, Ltd.**
**Tokyo 100-8280 (JP)**

(72) Inventors:
• **ISHII, Yoshikazu**
  **Tokyo, 100-8280 (JP)**
• **AIKAWA, Makoto**
  **Tokyo, 100-8280 (JP)**
• **MARUYAMA, Tatsuya**
  **Tokyo, 100-8280 (JP)**

(74) Representative: **MERH-IP Matias Erny Reichl Hoffmann**
**Patentanwälte PartG mbB**
**Paul-Heyse-Strasse 29**
**80336 München (DE)**

(54) **POWER TRADING SYSTEM AND METHOD THEREOF**

(57)     To conduct power trading with a trading market on condition that sellable power has been stored.

A power trading system includes: a power generation means for generating power; a power storage means for storing the power generated by the power generation means; and a power trading means for transmitting and/or receiving information to and/or from a trading market to conduct power trading, wherein the power trading means tenders a bid for at least part of sellable power to the trading market on condition that the sellable power has been stored in the power storage means.

Fig. 1

EP 3 573 010 A1

**Description**

BACKGROUND

The present invention relates to a power trading system and a method thereof.

Regarding one-to-one trading between business operators referred to as prosumers being customers and suppliers, there is a technique based on prediction as disclosed in Japanese Patent Laid-Open No. 2017-153274 (hereinafter referred to as Patent Literature 1). This publication discloses "The required power amount information acquisition part acquires information about a power amount required in a predetermined time slot by a first customer. The customer information acquisition part acquires information about the power generation apparatus and the storage battery owned by a second customer, and a power consumption amount of the second customer. The surplus power estimation part estimates a surplus power amount that can be supplied at the second customer based on information about a generated power amount of the power generation apparatus, the stored power amount in the storage battery, and the power consumption amount in the predetermined time slot of the second customer acquired in the customer information acquisition part. The matching part collates the surplus power amount that can be supplied from the second customer estimated in the surplus power estimation part with the information about the required power amount of the first customer acquired by the required power amount information acquisition part and detects a combination of the first customer and the second customer between which trading may be established."

Patent Literature 1: Japanese Patent Laid-Open No. 2017-153274

SUMMARY

In a conventional power system that supplies the power to meet demands using a large-scale power-supply facility, the demands are predicted, a power generation facility meeting the predicted demands is operated in consideration of economic efficiency, but when the power is supplied by the prosumer as disclosed in Patent Literature 1, it is necessary to also predict (in Patent Literature 1, the expression "estimate" is often used) a surplus power amount that can be supplied.

In particular, when the prosumer uses, as a power generation facilities, naturally fluctuating power supplies such as solar photovoltaic power generation, solar thermal power generation, or wind power generation, hydraulic power generation, power generation facilities using ocean phenomena such as a tidal stream (may include a combination of such naturally fluctuating power supplies and the distributed power supplies capable of controlling a gas engine power generation facility, or the like), it is necessary to predict the generated power amount having uncertainty, own demand, and the surplus power which is a difference between the generated power amount and the own demands.

Since it is known that the change rate in the overall demand is reduced by a phenomenon called a balancing effect of a leveling effect, or a mass aggregation effect, the risk of the prediction of the overall demand (the possibility that the prediction fails greatly) was low even when day-to-day demand of an individual consumer varies, when the demand of the entire system (or a part of system) is predicted in the conventional manner. Regarding the naturally fluctuating power supplies, the similar effect can be expected.

On the other hand, regarding the generated power amount and demand of the individual prosumer, such a statistical error suppressing effect cannot be expected. It is possible to acquire information about factors relating to the future demand such as action plans, and reflect the information to the prediction, unlike when the demand of the entire system is predicted. However, in any case, it is still necessary to make the trading based on the prediction.

An object of the present invention is to execute power trading with a trading market on condition that sellable power has been stored.

In order to solve the aforementioned problems, the present invention provides a power trading system including: a power generation means for generating power; a power storage means for storing the power generated by the power generation means; and a power trading means for transmitting and/or receiving information to and/or from a trading market to conduct power trading, wherein the power trading means tenders a bid for at least part of sellable power to the trading market on condition that the sellable power has been stored in the power storage means.

According to the present invention, the power trading with the trading market can be conducted on condition that sellable power has been stored, whereby the power trading can be conducted without power prediction.

BRIEF DESCRIPTION OF THE DRAWINGS

FIG. 1 is a configuration diagram of Embodiment 1 of the present invention;
FIG. 2 is a sequence diagram illustrating a flow of a power trading process in Embodiment 1 of the present invention;
FIG. 3 is a configuration diagram of Embodiment 2 of the present invention;

FIG. 4 is a sequence diagram illustrating a flow of a power trading process in Embodiment 2 of the present invention;

FIG. 5 is a configuration diagram of Embodiment 3 of the present invention;

FIG. 6 is a configuration diagram of Embodiment 5 of the present invention;

FIG. 7 is a configuration diagram of Embodiment 6 of the present invention;

FIG. 8 is a table illustrating an example of trading records in a trading record management unit;

FIG. 9 is a table illustrating of an example of trading records in the trading record management unit when a status is in a partially contracted state;

FIG. 10 is a flowchart illustrating an example of analysis procedure of the trading record management unit;

FIG. 11 is a graph showing execution results of the trading record management unit;

FIG. 12 is a configuration diagram illustrating an example of a display screen showing analysis results of the trading record management unit;

FIG. 13 is a graph for explaining a contract ratio vs. time curve used by the trading record management unit;

FIG. 14 is a flowchart illustrating an evaluation method of facility capacity sensitivity in the trading record management unit;

FIG. 15 is a flowchart illustrating an evaluation method of price sensitivity in the trading record management unit; and

FIG. 16 is a configuration diagram illustrating an example of a screen for selecting a time slot to be evaluated for price sensitivity by the trading record management unit.

## DETAILED DESCRIPTION OF THE EMBODIMENTS

Hereinafter, embodiments will be described using the drawings.

[Embodiment 1]

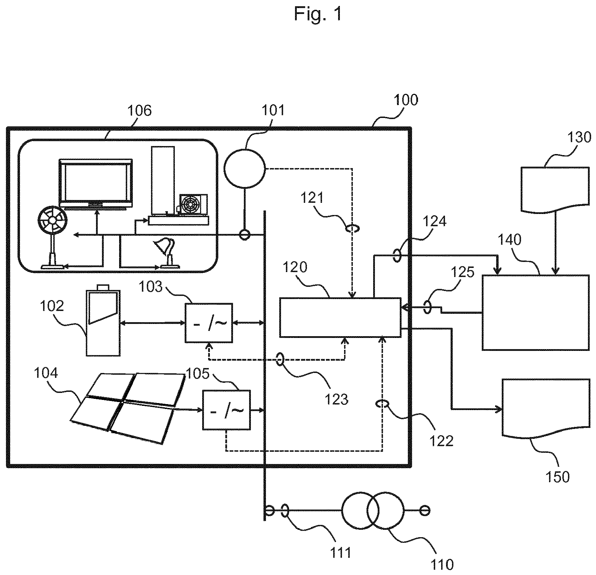

FIG. 1 is a configuration diagram of Embodiment 1. A prosumer's facility 100 includes a load power meter 101, a power storage facility 102, a PCS (Power Conditioning System) 103 interconnected with the power storage facility, a power generation facility 104, a PCS 105 interconnected with the power generation facility, a load facility 106, and a power trading unit 120, and the prosumer's facility 100 is interconnected with a power system via an in-facility distribution line 111 and a transformer 110 for power distribution. The in-facility distribution line 111 is coupled to the load power meter 101, the load facility 106, the PCS 103 interconnected with the power storage facility, and the PCS 105 interconnected with the power generation facility. The power storage facility 102 includes, for example, a storage battery, and is configured, as a power storage unit, to store the power generated by the power generation facility 104 and the power supplied from the power system. The PCS 103 interconnected with the power storage facility has a utility interconnection inverter for converting direct current power stored in the storage battery into alternating current power or converting alternating current power supplied from the in-facility distribution line 111 into direct current power. The power generation facility 104 has, for example, a power generator for generating the power using natural energy, and is configured, as a power generation unit, to generate the power using the power generator. The PCS 105 interconnected with the power generation facility has a utility interconnection inverter for converting direct current power generated by the power generator in the power generation facility 104 into alternating current power.

The load power meter 101 is configured, as a load detection unit, to measure power consumption (a power consumption amount) of the entire load facility 106, the power consumption being a load of the power storage facility 102, and output a measurement signal (measurement signal indicating the power consumption amount as a load amount) 121 indicating a measurement result to the power trading unit 120. The PCS 105 interconnected with the power generation facility has a function as a generated power amount measuring unit that measures the generated power amount indicating an amount of power generated by the power generation facility 104, and outputs a measurement signal 122 indicating an amount of power supplied (amount of power generated) by the utility interconnection inverter to the power trading unit 120. Upon receipt of information about a contract result 125 indicating a power trading result from a trading market 140 coupled to the power trading unit 120 through the network, for example, the power trading unit 120 generates a command 123 for controlling the utility interconnection inverter of the PCS 103 interconnected with the power storage facility based on the received information, the measurement signal 121, and the measurement signal 122, and outputs the generated command 123 to the utility interconnection inverter of the PCS 103 interconnected with the power storage facility. The PCS 103 interconnected with the power storage facility has a function as a power storage control unit for controlling the power storage facility (power storage unit) 102 as a controlled object, and controls an amount of power to be stored in the power storage facility 102 based on the command 123.

The power trading unit 120 is comprised of a computer device including a CPU (Central Processing Unit), an input device, an output device, a communication device, and a storage device, for example. At this time, the power trading unit 120 calculates a value by subtracting the power (contracted power amount) previously contracted and determined to be supplied during a certain time slot from a difference (surplus power amount) between the generated power amount and the load power amount in the time slot, and outputs the command (first power storage command) 123 for controlling the utility interconnection inverter of the PCS 103 interconnected with the power storage facility according to the calculated result, to the utility interconnection inverter of the PCS 103 interconnected with the power storage facility. Furthermore, when the utility interconnection inverter of the PCS 103 interconnected with the power storage facility is controlled according to the command 123, the power trading unit 120 tenders a bid 124 for sale, to the trading market 140, the power amount stored in the power storage facility 102, that is, the power amount stored during the time slot at the end of the time slot as a trade amount (power selling amount) that can be supplied in any one of time slots subsequent to the finished time slot. In other words, when the power trading unit 120 transmits and/or receives information to and/or from the trading market 140 to conduct the power trading, the power trading unit 120 tenders a bid for at least part of sellable power to the trading market 140 on condition that the sellable power has been stored in the power storage facility 102.

The power trading unit 120 tenders a bid 130 for purchase to the trading market 140. The trading market 140 performs matching of the bid 124 for sale with the bid 130 for purchase based on conditions such as a unit price, a power amount, and a time slot. The matching is performed if unit price of the bid 130 for purchase is higher than that of the bid 124 for sale in the same time slot. The power amount of the bid 124 for sale or the power amount of the bid 130 for purchase, whichever is smaller, is the contracted power amount. For example, the power amount of the bid 124 for sale is the contracted power amount when the power amount of the bid 124 for sale is smaller than the power amount of the bid 130 for purchase, and the power amount of the bid 130 for purchase is the contracted power amount when the power amount of the bid 130 for purchase is smaller than the power amount of the bid 124 for sale. When the contracted power amount is determined in the trading market 140, the trading market 140 notifies the power trading unit 120 of the contract result 125 indicating the contracted power amount at the time of contract.

Trading plans and actual results 150 of the power supply amount and the generated power amount are transmitted to the system operators such as a power transmission operator or a power distribution operator from the power trading unit 120, and are used for the imbalance settlements.

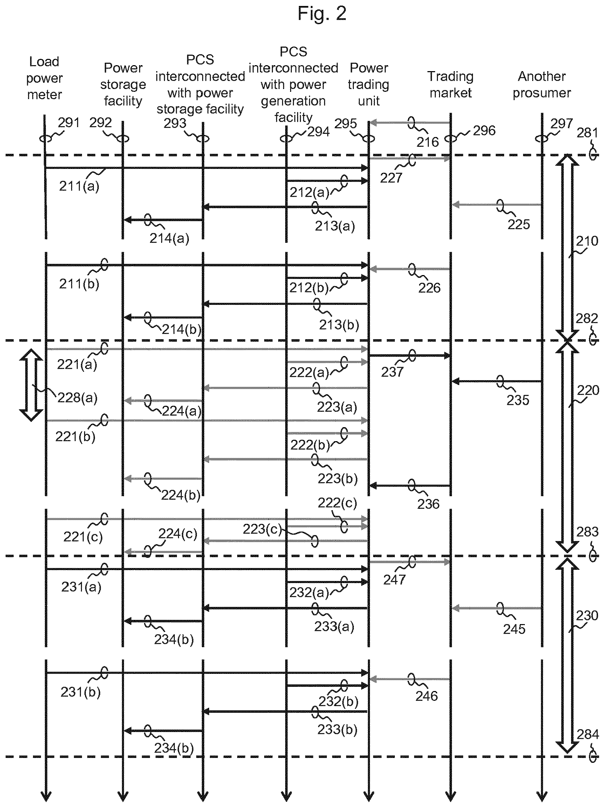

Hereinafter, a flow of a power trading process focused on the power trading unit 120 will be described using a sequence diagram of FIG. 2.

Vertical time axes 291 to 297 in the sequence diagram show the flows of the processes (or states) of the main components illustrated in FIG. 1 over time, respectively, and represent that the time proceeds from the upper to the lower sides in the sequence diagram. The components shown in the sequence diagram are, sequentially from the left, the load power meter 101, the power storage facility 102, the PCS 103 interconnected with the power storage facility, the PCS 105 interconnected with the power generation facility, the power trading unit 120, the trading market 140, and another prosumer (another prosumer that accesses the trading market 140).

Among horizontal arrows shown between the time axes 291 to 297 of the respective components, for example, an arrow 211(a) indicates a transaction of communication or control from the root of the arrow toward the tip of the arrow. Each time axis can be divided into time slots 210, 220, and 230 indicated by hollow double-ended arrows corresponding to respective trading units (products) of the trading market 140 as indicated by dashed lines 281, 282, 283, 284, and similar processes (transactions between components) are performed in each of the time slots 210, 220, and 230. Note that the trading market 140 as used herein is not intended to be limited only to markets such as Japan Electric Power Exchange existing in Japan as of 2017, and also includes a local energy market or a marketplace for energy in which worldwide advanced trial is found.

Each of the time axes 291 to 297 is shown in a partially broken manner in each of the time slots 210, 220, and 230, but this means omission of the processes. When similar communication sequence (a plurality of transactions complying with a certain sequential order) to that in an upper side of the partially broken portion exists in a lower side of the partially broken portion, this means that the similar sequence also continues in the partially broken portion. For example, transactions 211(a), 212(a), 213(a), and 214(a) are a series of sequence. A suffix (a), (b), or (c) is added to the reference numeral to exhibit a sequence difference. On the other hand, the transactions 227, 225, and 226 are not similarly repeated before and after the partially broken portion of the time axes in the time slot 210 to which such transactions belong. This means that a sequence of these transactions is executed only once in the corresponding time slot.

In the transactions executed in the facility 100, the transactions 211(a) to 214(b) in the time slot 210 have the second digit set to "1," the transactions 221(a) to 224(c) in the time slot 220 have the second digit set to "2," and the transactions 231(a) to 234(b) in the time slot 230 have the second digit set to "3," to enable he transactions to be distinguished from one another. In the sequence in each of the time slots, the suffix (a), (b), (c) or the like is added to each of the numeric values, as described above.

The transactions repeatedly executed in each of the time slots 210, 220, and 230 are also basically repeated at regular intervals of time.

Hereinafter, the sequence executed in the time slot 210 will be described as an example.

The load power meter 101 measures a power consumption amount (load power amount) of a load (load facility 106) at a fixed period shorter than the length of the time slot 210, and notifies the power trading unit 120 of the measurement result as the transaction 211(a). The PCS 105 interconnected with the power generation facility notifies the power trading unit 120 of the generated power amount indicating a power generation result value of the power generation facility 104 at the same period as that of the load power meter 101. The power trading unit 120 calculates the stored power amount or the discharged power amount of the storage battery of the power storage facility 102 based on the above-described transactions 211(a) and 212(a) and a transaction 216 of the contract notification received from the trading market 140 in a time slot (the corresponding hollow double-ended arrow is not shown in FIG. 2) before the time slot 210, generates the command 123 according to the measurement result, and notifies the PCS 103 interconnected with the power storage facility of the generated command 123 as the transaction 213(a). The PCS 103 interconnected with the power storage facility controls the storage battery (controls the stored power amount or the generated power mount) based on this command 123. A control command based on this command 123 is shown as the transaction 214(a). An example of a period of such a series of sequence is shown as a period (short period) 228(a) in the time slot 220.

Next, communication transactions between the power trading unit 120 and the trading market 140, and between the trading market 140 and another prosumer will be described.

The time slot 210 will be described as an example. Since the power consumption amount (load power amount) in the time slot 210 is obtained by each of the transactions 211(a) and 211(b) from the load power meter 101, and the generated power amount in the time slot 210 is obtained by each of the transactions 212(a) and 212(b) from the PCS 105 interconnected with the power generation facility, the power trading unit 120 calculates a sellable power amount based on the power consumption amount and the generated power amount, and notifies the trading market 140 of the information about the calculated sellable power amount as a selling-bid transaction 237 in the time slot 220. Since the power consumption amount of the load facility 106 and the generated power amount of the power generation facility 104 in the time slot 210 are not determined until the time slot 210 ends, the selling-bid transaction 237 is executed in the next time slot 220. Furthermore, since the contract of trading requires time, the power is sold in the time slot 230 or later. Accesses to the trading market 140 from another prosumer are represented as transactions 225, 235, and 245, respectively. A part of these transactions is the bid 130 for purchase, and this bid 130 for purchase includes a bid 130 for purchase in the time slot in which the power is sold by the above-described selling-bid transaction 237, for example, in the time slot 230.

The trading market 140 matches the bid 124 for sale with the bid 130 for purchase in the same time slot, and has a contract of power trading concluded, the power trading meeting the conditions for price and amount. Strictly, not only price but also power system constraint needs to be taken into consideration, but the details thereof are not described herein. The trading market 140 may perform matching in consideration of the power system constraint.

When the trading market 140 performs the matching to detect the bid 124 for sale and the bid 130 for purchase matching the conditions, these bids are contracted. The contract result is notified from the trading market 140 to the power trading unit 120 of the prosumer, as a transaction 236 in the time slot 220, for example. This transaction 236 includes at least contracted traded power amount. In this case, the traded power amount in the transaction 236 is equal to or smaller than a sellable power amount determined in the time slot 210.

Next, when the transaction 235 notified from another prosumer to the trading market 140 in the time slot 220 is regarded as the power trading in the time slot 230, the control of the PCS 103 interconnected with the power storage facility in the time slot 230 based on this trading result will be described again later.

In the time slot 220, the power trading unit 120 is notified of a power consumption amount (load power amount) by the transaction 221(a) from the load power meter 101 and the generated power amount indicating the power generation result by the transaction 222(a) from the PCS 105 interconnected with the power generation facility in a short period indicated by the period 228(a). The power trading unit 120 calculates the sellable power amount based on the consumption amount and the generated power amount, and notifies the trading market 140 of the information about the calculated sellable power amount as the selling-bid transaction 237. When the transaction 236 for the contract result is notified to the power trading unit 120 as a result of the transaction 237, the power trading unit 120 converts the contracted amount (contracted power amount) included in the transaction 236 into a Wh value with respect to the length of the period 228(a) to obtain the converted contracted amount.

Then, the power trading unit 120 calculates a difference between the generated power amount and the power consumption amount as surplus power (a surplus power amount), calculates a power amount obtained by subtracting, from the calculated surplus power, the power amount to be sold (converted contracted amount) that is contracted in the time slot 230, as the stored power amount or the discharged power amount, and notifies the PCS 103 interconnected with the power storage facility of the command (first power storage command) 123 including the calculated result as the transaction 223(b). The PCS 103 interconnected with the power storage facility notifies the power storage facility 102 of the control command generated based on the command 123 as a transaction 224(b). Thereby, the storage battery of the power storage facility 102 can store or discharge the power amount (the stored power amount or discharged power amount) obtained by subtracting, from the surplus power, the power amount to be sold (converted contracted amount) that is contracted in the time slot 230.

Note that this power amount to be sold is previously stored in the power storage facility 102, as the surplus power. As described herein, when processes of trading the surplus power in the time slot 210 during the time slot 220 and selling (supplying) the power during the time slot 230 are performed in successive cycles, it is necessary to reduce the power amount to be sold to be smaller than the power amount stored as the surplus power amount by a certain amount taking into consideration an amount of the stored power to be naturally discharged, but in such a case, a situation in which the power amount to be sold is insufficient, resulting in making it impossible to sell the contracted power amount does not occur. Note that when the PCS 103 interconnected with the power storage facility fails, it is not limited to the above case.

Since the surplus power in the time slot 230 does not depend on the contracted amount in the time slot 230 (included in the transaction 236 in this description), the surplus power in the time slot 230 does not coincide with the stored power amount to be stored in the time slot 230 due to the above-described control, and becomes the sum of the power amount to be sold and the stored power amount in the time slot 230.

The PCS 103 interconnected with the power storage facility in the time slot 210 is believed to be controlled as described earlier in consideration of the power amount to be sold that is contracted as the power amount to be sold in the time slot 210 by tendering the bid before the time slot 210, for example, the power amount to be sold included in the transaction 216. In a bid executed in the time slot 220 subsequent to the time slot 210, the bid for a difference between the generated power amount and the power consumption amount in the time slot 210 is tendered. Also in the time slot 220 in which the above-described trading is executed, the PCS 103 interconnected with the power storage facility is controlled based on the power amount to be sold that is contracted by the transaction 226, and a transaction 247 for a bid is executed without consideration of the control of the PCS 103 interconnected with the power storage facility.

These relationships are shown in Expression 1 and Expression 2.

[Expression 1]

$$B(t)=\int_{t-\Delta t}^{t} R(t)-L(t)-C(T)/\Delta T \, dt$$

[Expression 2]

$$S(T+2)=\int_{T-\Delta T}^{T} R(t)-L(t) \, dt$$

The load (the power consumption amount of the load facility 106) and the generated power amount (the generated power amount of the power generation facility 104) continuously change over time, but here, a very short time interval t is considered, and the description is based on the assumption that the conditions (voltage, current) are constant during the time interval t. "t" represents such a minute time slot. "T" represents an end point-in-time of each of the above-described time slots 210, 220, and 230. "$\Delta T$" included in the integration interval represents a period length of each of the time slots 210, 220, and 230, and "$\Delta t$" represents a period length of a period of measuring operation of the power consumption amount and the generated power amount, the period being indicated by the period 228(a). "R(t)" represents an amount of power generated during the minute time slot t, "L(t)" represents a power consumption amount of the load (the load facility 106) during the minute time slot t, "B(t)" represents an amount of power stored (stored power amount of the storage battery) during the minute time slot t, and "C(T)" represents a contracted power amount (contracted amount) in the contracted time slot whose end point-in-time is T. "$\Delta T$" represents a time length of such a contracted time slot.

The right side of Expression 1 means that the control is performed to charge in or discharge from the power storage facility 102, a power amount obtained by subtracting a contract portion $C(T)/\Delta T$ from a difference between the generated power amount R(t) and the load (power consumption amount) L(t), during each very short time t.

The right side of Expression 2 represents a surplus power amount in the time slot T (from a point of time T-$\Delta T$ to a point of time T), and the left side of Expression 2 represents the maximum bidding amount of a bid 124 for sale tendered based on the surplus power amount. While a time is required to determine the bid 124 for sale as described above, the right side of Expression 2 is determined at T that is the end point-in-time of the time slot T. Since this is a start point-in-time of the time slot T+1, the power cannot be sold in the time slot T+ 1, and will be sold at least in the time slot T+2 or later, the left side of Expression 2 is S(T+2).

According to the present embodiment, the power can be traded with the trading market on condition that the sellable power has been stored. More specifically, the power can be continuously traded without power prediction, by simultaneously performing the power selling based on the contracted power amount (transaction 216) in a time slot (200) immediately before the time slot 210, the contracted power amount being determined based on the trading (transaction 216) of the time slot (200), and the storage of a power amount obtained by subtracting the contracted power selling amount (contracted power amount) from the surplus power amount indicating a difference between the power amount generated by a regenerated energy device (power generation facility 104) and the load (power consumption amount of the load facility 106), and executing the trading process for the bid to sell the surplus power amount (excluding an amount of power to be sold, in other words, it is not the amount stored in the power storage facility 102 in the time slot) as the maximum bidding amount (Expression 2). Even a small-scale power storage facility, and a storage battery such as a lead-acid battery that can be operated only in the SoC (State of Charge) basically close to full charge can be used for the power trading, by setting the length of each of the time slots 210, 220, and 230 described herein to a short time interval such as one minute, 30 seconds, or the like, for example, according to small operable capacity of the power storage facility 102. The bidding amount is sequentially determined based on the actual power storage at predetermined time intervals, thereby capable of avoiding the risk of prediction uncertainty.

[Embodiment 2]

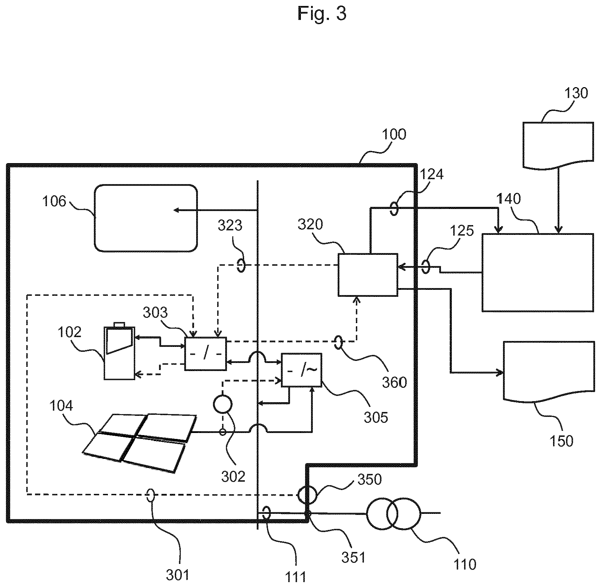

Embodiment 2 of the present invention will be described with reference to FIG. 3. In the present embodiment, the same reference numerals as those in FIG. 1 are used to denote the same portions as those in FIG. 1. In the present embodiment, a power trading unit 320 is used instead of the power trading unit 120, a DC converter 303 that converts the direct current power to direct current power is arranged instead of the PCS 103 interconnected with the power storage facility, and a PCS 305 interconnected with power generation and power storage facilities is arranged instead of the PCS 105 interconnected with the power generation facility, to have a configuration in which the power storage facility 102 is coupled to a direct current side of the PCS 305 interconnected with power generation and power storage facilities through the DC converter 303, thereby interconnecting with the power storage facility 102. The power trading unit 320 of the present embodiment is interconnected with the DC converter 303 interconnected with the power storage facility, to sell the power previously contracted in a manner similar to Embodiment 1, calculate a difference between the generated power amount of the power generation facility and the load (power consumption amount) of the load facility 106, and trade the calculated difference with the trading market 140.

The PCS 305 interconnected with power generation and power storage facilities converts the direct current power generated by the power generation facility 104 into alternating current power, and outputs the alternating current power to the in-facility distribution line 111. The PCS 305 interconnected with power generation and power storage facilities controls a phase difference between a current and a voltage, or the voltage when the direct current is converted to the alternating current, using a sensor 302 that detects the voltage and the current of the direct current portion on the power generation facility side, and controls the power generated by the power generation facility 104 to flow into the in-facility distribution line 111. Note that the PCS 305 interconnected with power generation and power storage facilities transmits information of the sensor 302 to a maximum power follow controller (not illustrated) of the power generation facility 104, to be used as the information for suppressing the power generation when the system voltage is high.

When the DC converter 303 interconnected with the power storage facility receives, from the power trading unit 320, a command (second power storage command) 323 indicating a contracted amount (contracted power amount) C(T) in a contracted period included in the contract result 125 in the trading market 140, the DC converter 303 interconnected with the power storage facility controls its output voltage so that an accumulated value in the time slot T of the power M(t) in a received power meter 350 that measures a tide at an interconnection point 351 in the period coincides with the trading amount (contracted amount) C(T), as shown in Expression 3. When the time slot T ends and proceeds to the time slot T+1, the stored power amount B(T) - B(T-1) in the time slot T is determined as the stored power amount of the power storage facility 102, and therefore the DC converter 303 outputs, to the power trading unit 320, a monitoring result 360 indicating that the stored power amount of the power storage facility 102 has been determined. That is, when the DC converter 303 controls the power storage facility 102 as a controlled object, and receives the command 323 indicating the contracted amount (contracted power amount) C(T) as a controlled variable, the DC converter 303 has a function as a power storage control unit for controlling an amount of power stored in the power storage facility 102 based on the command 323 and has a function as a power storage state monitoring unit for monitoring a power storage state of the power storage facility 102 and outputting the monitoring result 360 to the power trading unit 320. The received power meter 350 is configured as a received power amount measuring unit for measuring a received power amount at the interconnection point 351 connecting the in-facility distribution line 111 coupled to the load facility 106 and the power system.

The power trading unit 320 tenders, to the trading market 140, a bid for a value (a power amount indicating the sum of the stored power amount in the time slot T and the trading amount C(T) in the time slot T) obtained by adding the trading amount (contracted power amount contracted in the past) C(T) in the time slot T to the stored power amount in the time slot T as a selling-bid amount in the time slot T+2 or later, as shown in Expression 4.

[Expression 3]

$$C(T)=\int_{T-\varDelta T}^{T} M(t)\, dt$$

[Expression 4]

$$S(T+2)=B(T)-B(T-1)+C(T)$$

Thus, there is an advantage that the load (power consumption amount of the load facility 106) needs not to be measured, in comparison with the case of Embodiment 1.

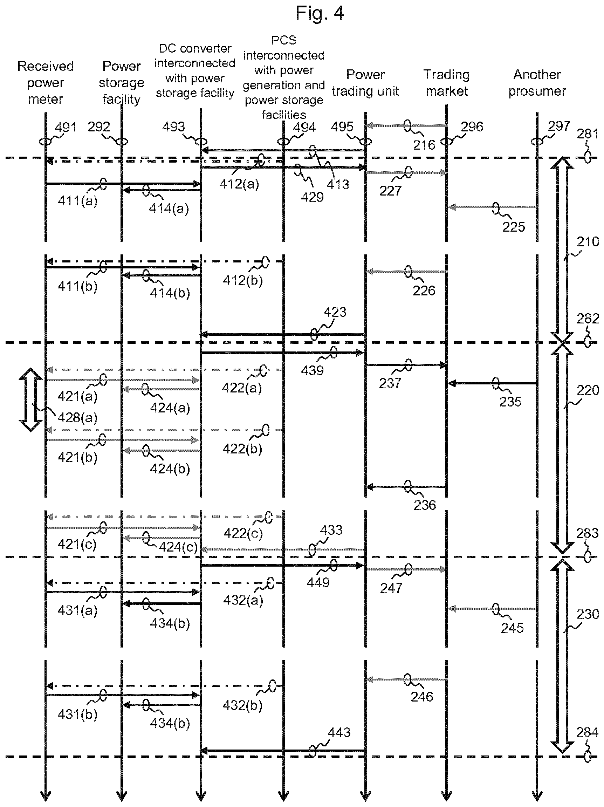

Hereinafter, a flow of a power trading process focused on the power trading unit 320 in the present embodiment will be described using a sequence diagram of FIG. 4.

Although FIG. 4 is basically similar to FIG. 2, the following description will focus on the trading process shown in the left side of the power trading unit 320 that is different from that of FIG. 2. The same reference numerals as those in FIG. 2 are basically used to denote the same portions as those in FIG. 2.

The description will be provided by focusing on the time slot 220. When the bid for sale (transaction 227) is established based on the bid for sale (transaction 227) and the bid for purchase (transaction 225) executed in the time slot 210 immediately before the time slot 220, the power selling amount (power amount corresponding to the contracted power amount) is notified from the trading market 140 to the power trading unit 320 as the transaction 226 for the contract result. Here, "T" is a start point-in-time of the time slot 220. Based on this result, the power trading unit 320 issues a transaction 432 for the command 323 to the DC converter 303 interconnected with the power storage facility. According to the command 323, C(T) itself may be notified or C(T)/ΔT may be notified.

On the other hand, the DC converter 303 interconnected with the power storage facility acquires a measurement value 301 of the received power meter 350 during the time slot 220, for example, at a fixed period such as a period 428(a) (transaction 421(a)). The DC converter 303 interconnected with the power storage facility controls the stored power amount of the power storage facility 102 (transaction 424(a)) so that the power selling amount in the period ΔT (the right side of Expression 3) is C(T) using the power selling amount in the time slot 220 that is previously acquired, and this measurement value (measurement value in the transaction 421(a)).

Note that transactions 422(a), 422(b), and 422(c), which are indicated by dashed-dotted lines, from the PCS 305 interconnected with power generation and power storage facilities to the received power meter 350 indicate that the received power amount changes depending on the operation of the PCS 305 interconnected with power generation and power storage facilities. Since the PCS 305 interconnected with power generation and power storage facilities acquires the state of the output side of the power generation facility 104 using the sensor 302 to control all the power generated by the power generation facility 104 to flow into the in-facility distribution line 111, the received power changes depending on the generated power amount and the consumption power of the load facility 106, thereby influencing the output of the received power meter 350. Since such an influence differs from the communication transaction, the transactions 422(a), 422(b), and 422(c) are indicated by dashed-dotted lines here to be distinguished from the other transactions.

The DC converter 303 interconnected with the power storage facility may acquire C(T)/ΔT to control the stored power amount of the power storage facility 102 so that the measurement value of the received power meter 350 (transaction 421(a)) is always C(T)/ΔT. As a specific control method, feedback control can be used for the latter case. The feedback control can be also used for the former case, but feed forward control can be also used as the control method so that the integral value at a fixed period coincides with the target value and an error within an allowable range.

When the time length (dt) of the time slot 428(a) which is the cycle of control is sufficiently shorted than the time length (ΔT) of each of the time slots 210, 220, and 230 as a unit of the power trading, a difference between a previous measurement value M(t-1) of the received power meter 350 and the power selling amount C(T).dt/ΔT in the same time slot may be stored in the time slot of the control cycle with a delay of one sample.

Note that M(t) represents the received power amount, and therefore M(t) becomes a negative value while the power is sold. On the other hand, C(T) represents the power selling amount, and therefore C(T) becomes a positive value while the power is sold. Accordingly, the difference therebetween to be calculated is represented as -M(t-1) - C(T) dt/ΔT when the power selling is set to be positive.

When this value is the stored power amount B(t) in the next control cycle, an error corresponding to dt time remains, but this allows the operation almost close to the operation represented by Expression 3.

Thus, when the processes from acquisition of the measurement value of the received power meter 350 (transactions 421(a), 421(b), and 421(c)) to control of the power storage facility 102 (transactions 424(a), 424(b), and 424(c)) are repeated at a fixed period, the received power amount measured by the received power meter 350 in the time slot 220 is controlled to coincide with the power selling amount (power to be sold). The stored power amount in the time slot 220 based on this control is traded between the power trading unit 320 and the trading market 140 immediately after start of the next time slot 230, and the contract result is notified to the power trading unit 320 as a transaction 246, and as described in the time slot 220, the process is performed in a time slot 240 (although not illustrated, is a time slot subsequent to the time slot 230).

The present embodiment can achieve the effect similar to that achieved by Embodiment 1, the load power meter 101 for measuring the power consumption amount (load amount) of the load (load facility 106) does not need to be provided, and thus the cost of the entire power trading system can be reduced.

[Embodiment 3]

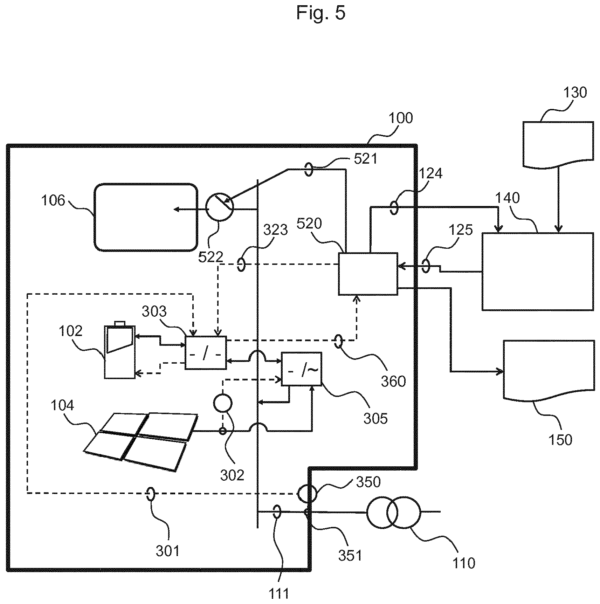

Next, Embodiment 3 of the present invention will be described with reference to FIG. 5. In the present embodiment, a power trading unit 520 is arranged instead of the power trading unit 320, a load restraining unit 522 is arranged between the load facility 106 and the in-facility distribution line 111, and a basic configuration is similar to the configuration of Embodiment 2 illustrated in FIG. 3. However, the processes of the power trading unit 520 are different from those of the power trading unit 320 of the Embodiment 2. That is, the power trading unit 520 generates a load restraining command 521 based on the contract result 125, and outputs the generated load restraining command 521 to the load restraining unit 522. The load restraining unit 522 controls, based on the load restraining command 521, the load (load facility 106) to be blocked to reduce the power consumption amount of the load (load facility 106).

Note that FIG. 5 illustrates that all loads belonging to the load facility 106 are configured to be blocked, but in the present embodiment, in addition to such a configuration, a configuration may be employed in which only a part of loads can be blocked. In addition to blocking the loads, the load restraining command 521 may include a command signal for reducing the power consumption amount of the load facility 106, such as a set temperature of an air conditioner and ventilation of a ventilation fan in the load facility 106.

The power trading unit 520 in the present embodiment does not process an amount of power stored (power amount) in the time slot T as a bidding amount (maximum bidding amount) S(T+2) in the time slot T+2 (or later), unlike Expression 2 in Embodiment 1 and Expression 4 in Embodiment 2, and determines the bidding amount as a product of R and a difference between SoC(T) which is an SoC value (value indicating the state of charge of the storage battery) at this point in time and SoC(min) which is a minimum SoC value in operation or C which is a C value representing the performance of the power storage facility 102, whichever is smaller.

[Expression 5]

$$S(T+2)=R \cdot \mathrm{Min}(SoC(T)-SoC(min),\ C)$$

Here, "R" represents a facility capacity of the power generation facility 104. This enables trading of not only the power generated in the time slot T but also the power previously stored. When the power thus stored in the past can be traded without an unexpected risk, it becomes possible to trade the power in the time slots which are advantageous in price.

Note that when the power stored (stored power amount) in a plurality of time slots is thus traded with the trading market 140, the traded power amount is increased in one trading time slot (time length ΔT), thereby increasing a possibility that the contracted power cannot be supplied when the power consumption of the load (load facility 106) is large. When the storage battery is controlled in the trading time slot based on Expression 3 in a similar manner to Embodiment 2, in particular, when the storage battery is controlled to supply constant power during a time ΔT in the same time slot, that is, when the balanced power is supplied at C(T)/ΔT, it is assumed that the SoC when there are no power generated by the power generation facility 104 and no load applied by the load facility 106 changes linearly from the SoC (T) to SoC lower than the contracted traded amount C(T) by C(T)/R.

When the SoC value falls below the assumption curve earlier in the actual control, or when the SoC value falls far beyond a fixed level in the actual control, the power trading unit 520 may output the load restraining command 521 to the load restraining unit 522 to reduce the load (load facility 106). In this way, even when large power is traded in one time slot, the contracted power supply can be ensured. Note that incidentally, a relationship represented by Expression 8 is established between B(t) and SoC(t).

The present embodiment has been described on the premise of the configuration of Embodiment 2 illustrated in FIG. 3, but may be applied to the configuration of Embodiment 1 illustrated FIG. 1. As shown in Expression 5, an amount bidden for trading (bidding amount) S(T+2) is determined based on the SoC, the C value representing the performance of the power storage facility 102, and the rated capacity R, and thus the bidding amount can be determined similarly to the configuration of Embodiment 2, even with the configuration of Embodiment 1. Furthermore, the change in SoC within the trading time slot when the power contracted in the trading is discharged can be similarly assumed. In the configuration of Embodiment 1, the power storage facility 102 is controlled according to Expression 1 instead of Expression 3, but the SoC(t) is checked as described on the premise of the configuration of Embodiment 2, the load may be reduced using the load restraining unit 522 when the SoC(t) falls lower than planned by a fixed value or more. Thus, the present embodiment can be applied to the configuration of Embodiment 1, and can achieve the effect similar to that achieved by Embodiment 1.

The present embodiment can achieve the effect similar to that achieved by Embodiment 1, and the surplus power including the power stored in the past can be sold (bidden).

[Embodiment 4]

Next, Embodiment 4 of the present invention will be described. In the present embodiment, a basic configuration and processes are similar to those of Embodiment 2 described with reference to FIG. 3 and FIG. 4. Here, "D(T)" represents a planned power storage amount in the time slot T. In the time slot T, the storage battery is controlled according to Expression 3, and the bid for the time slot T+2 is executed according to Expression 6. In this way, the planned power storage amount may not be supplied to the trading or the power stored in the past can be also supplied to the trading. The present embodiment has been described on the premise of the configuration of Embodiment 2 illustrated in FIG. 3, but may be applied to the configuration of Embodiment 1 illustrated FIG. 1. Note that in this case, the bidding amount S(T+2) is determined based on Expression 7 instead of Expression 6.

[Expression 6]

$$S(T+2)=B(T)-B(T-1)+C(T)-D(T)$$

[Expression 7]

$$S(T+2)=\int_{T-\Delta T}^{T} R(t)-L(t)dt-D(T)$$

[Expression 8]

$$B(t)=R \cdot SoC(t)$$

According to the present embodiment, the planned power storage amount may be excluded from the subject of trade, but the surplus power including the power stored in the past can be sold.

[Embodiment 5]

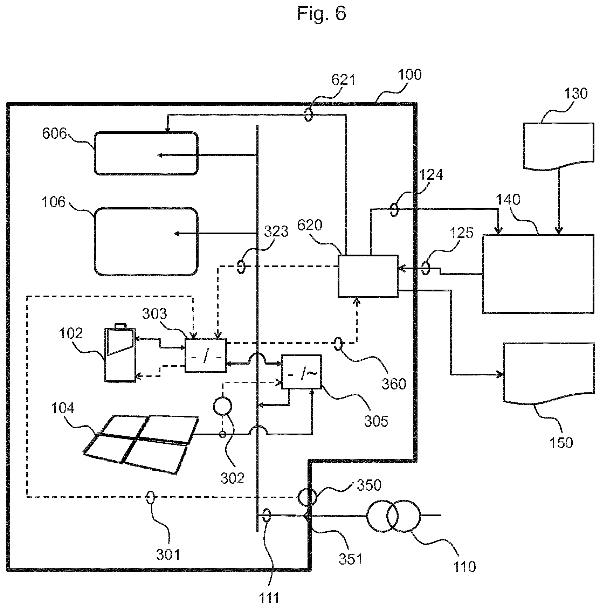

Next, Embodiment 5 of the present invention will be described with reference to FIG. 6. In the present embodiment, a power trading unit 620 is arranged instead of the power trading unit 320, a preliminary load 606 coupled to the in-facility distribution line 111 is arranged as a load, in addition to the load facility 106, and a basic configuration and processes are similar to those of Embodiment 2 described with reference to FIG. 3 and FIG. 4. In the present embodiment, a power storage facility with a small capacity such as a power storage facility like a lead-acid battery unsuitable for cycle operation and a capacitor is used for a part of the power storage facility 102.

The power trading unit 620 of the present embodiment always monitors the SoC of the power storage facility 102, and takes a monitoring result 360. When the SoC value exceeds a predetermined value (set value), the power trading unit 620 generates a preliminary load start command 621, and outputs the generated preliminary load start command 621 to the preliminary load 606 to drive (start) the preliminary load 606. With such a configuration, the power storage facility 102 for BCP (Business Continuity Plan) which can be operated only in the state basically close to full charge, and the power storage facility 102 such as a small capacitor which is mounted on a simplified hybrid vehicle can be used for the power trading.

The similar effect can be achieved even in such a configuration in which the power trading unit 620 controls the power generation facility 104 to reduce the power generation when the SoC value exceeds the predetermined value, instead of controlling the preliminary load according to the preliminary load start command.

The present embodiment can be applied to the configuration of Embodiment 1, similarly to Embodiment 3 and Embodiment 4.

According to the present embodiment, since the preliminary load 606 is started when the stored power amount of the power storage facility 102 exceeds a predetermined value (set value), the stored power of the power storage facility 102 comprised of a small capacitor, a lead-acid battery, or the like can be used for the power trading.

[Embodiment 6]

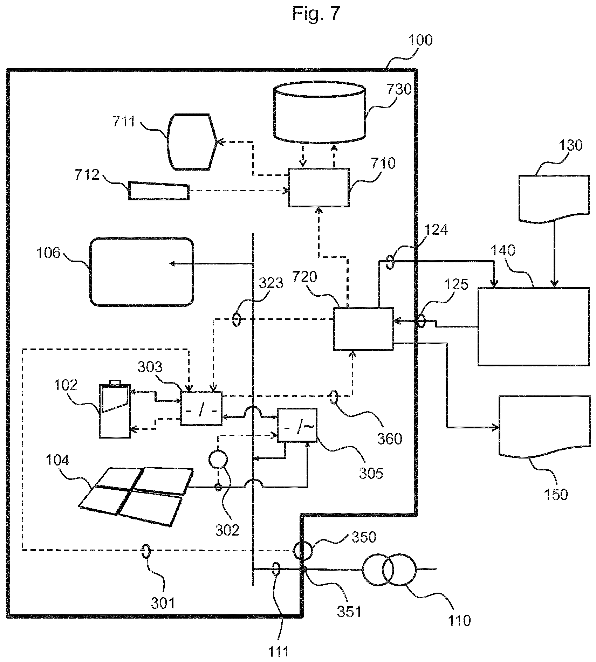

Next, Embodiment 6 of the present invention will be described with reference to FIG. 7. In the present embodiment, a power trading unit 720 is arranged instead of the power trading unit 320, and a trading record management unit 710, a trading management screen 711, a trading management input unit 712, and a trading history storage unit 730 are arranged in the facility 100, and a basic configuration and processes are similar to those of Embodiment 2 described with reference to FIG. 3 and FIG. 4. Note that the present embodiment has been described on the premise of the configuration of Embodiment 2, basically, but may be applied to the configuration of Embodiment 1, similarly to Embodiment 3 to Embodiment 5. Furthermore, the trading record management unit 710, the trading management screen 711, the trading management input unit 712, and the trading history storage unit 730 are constituted by a computer device including a CPU, an input device, an output device (display device), a communication device, and a storage device (primary storage device), for example. The trading record management unit 710 is constituted by a CPU, the trading management screen 711 is constituted by a display device (display unit), the trading management input unit 712 is constituted by an input device such as a mouse and a keyboard, and the trading history storage unit 730 is constituted by a storage device.

The power trading unit 720 of the present embodiment can be applied to any of Embodiments 1 to Embodiment 5, and notifies the trading record management unit 710 of the information about a set of the bidding amount S(T) indicating the power trading result and the trading amount (power amount corresponding to the contracted power amount) C(T). This notification may be made every time the trading is established, that is, when the bidding amount S(T) is contracted and the trading amount C(T) is established, or at each of timings of bidding and contract. The record unit may be provided to the power trading unit 720 itself so that the notification is made, for example, at 0 midnight at the first day of the month in a batch processing method.

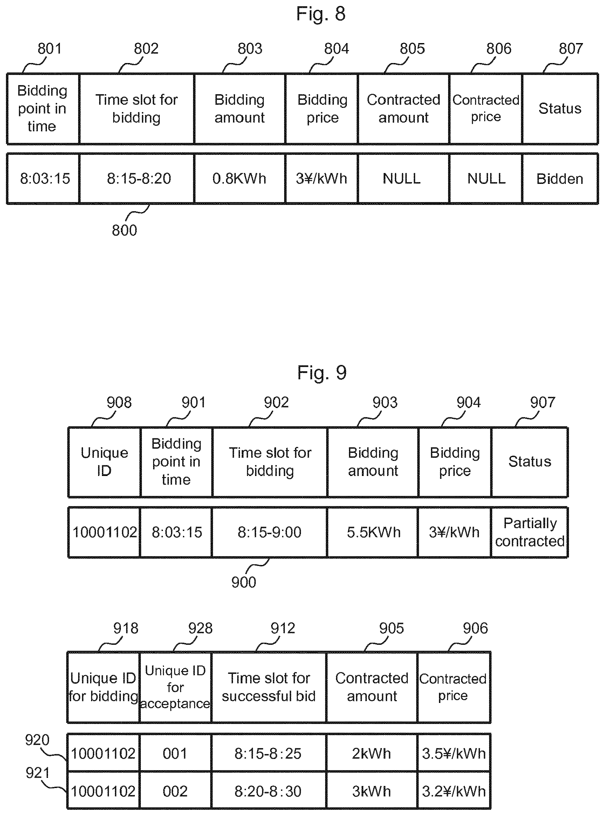

Upon receipt of the notification from the power trading unit 720, the trading record management unit 710 stores the information about the trading record added to the notification in the trading history storage unit 730. An example of the trading records is shown in FIG. 8.

As shown in FIG. 8, bidding records 800 have attributes such as a bidding point-in-time 801, a time slot 802 for bidding, a bidding amount 803, a bidding price 804, a contracted amount 805, a contracted price 806, and a status 807. Since the bidding price 804 may be an asking price, the bidding price 804 may not be determined at the bid state, but any specific numerical values are set for at least the attributes other than the bidding price 804. Note that examples of the status 807 includes a state in which a bid is tendered and the contract is waited (in FIG. 8, such a state is described as "bidden"), a state in which the contract is made (although not shown, described as "contracted," for example), a state in which the bid has been tendered, but the bit is withdrawn by the convenience of the bidder (although not shown, described as "withdrawn," for example), and a state in which the time of the bid to the specified time slot for bidding has been closed without appearance of a successful bidder (although not shown, described as "rest of sale").

In FIG. 8, the bidding point-in-time 801 and the time slot 802 for bidding are shown in the form of "hours : minutes : seconds" or "hours : minutes - hours : minutes," but when the width of the time slot is fixed by the constraint of the trading market 140, the time slot can be shown only in the form of "hours : minutes," and therefore only the start point-in-time to end point-in-time may be recorded in the recording forms such as "hours : minutes." Furthermore, as the time slot, the "start point-in-time" and the "end point-in-time" may be recorded as another attributes. The point in time is exemplified in the form of "hours : minutes" to "hours : minutes : seconds," but may be recorded in the form including "year, month, date", or may further include the information about special days such as public holidays, school holidays, Black Friday, and Single's Day (Nov. 11). The information about precipitation, an amount of sunlight, temperature, and the like may be added when the actual results 150 are defined.

When the contract is made, the information about the contracted amount 805 and the contracted price 806 notified from the power trading unit 720 to the trading record management unit 710 is set in a target record.

Since the trading market 140 of the present embodiment is not necessarily directed to the current wholesale power exchange market, the partially contracted state for power amount or time slot is assumed. An example of trading records corresponding to such a case is shown in FIG. 9.

As shown in FIG. 9, the bidding records 900 includes the information similar to the example shown in FIG. 8 except that the bidding records 900 includes a unique ID 908 for uniquely identifying the bid, but does not include the information about the contract. If the bid can be uniquely identified only based on the information about bidding point-in-time 901, it is not necessary to provide the unique ID 908 as a special ID attribute, unlike the present embodiment. To cope with the partial contract, the information about the contract is set in another record, and it is necessary to store another record in association with the bidding records 900. As such an example, FIG. 9 shows an example in which two result records 920 and 921 are stored in association with the bidding records 900.

The result records 920 and 921 relating to the contract information each include information about a unique ID 918 for bidding for identifying a target bit, a unique ID 928 for acceptance for identifying one or more possible contract records, a time slot 912 for successful bit representing a time slot for successful bit, a contracted amount 905 representing an amount and a price which are contracted in the contract records, and a contracted price 906.

Although the contract mechanism of the trading market 140 is not mentioned in detail, in a case of a continuous session system, the bids for acceptance in which the acceptance price exceeds the bidding price 904 and the time slot for acceptance is included in the time slot 902 for bidding in a range where the total of the contracted amounts 905 of the result records (contract records) 920 and 921 is below the bidding amount 903 of the bidding records 900 are sequentially contracted. The acceptance price of the contracted bid is set as the contracted price 906 of each of the result records (contract record) 920 and 921, and the acceptance amount of the contracted bid is set as the contracted amount 905.

Such trading and the information based on the trading (the contracted amounts 805 and 905, the contracted prices 806 and 906, the time slot 912 for successful bit) are determined not only in a site such as the trading market 140 for facilitating an infinite number of trades, but also in one-to-one trading such as cross trade transaction and in trading (P2P trading) using the technique (strictly, block chain as the technical base) of bitcoin for making the cross trade transaction without using a conventional credit system such as business transaction. Note that such a trading market 140 in a broad sense is not limited to Embodiment 6 described herein, and can be applied to Embodiment 1 to Embodiment 5.

The trading record management unit 710 records the information about the trading results shown in FIG. 8 to FIG. 9 to the trading history storage unit 730. Furthermore, the trading record management unit 710 analyses the history data according to the analysis command at a fixed point-in-time such as 0 : 00 midnight every day and an occasional analysis command implemented by a user of the facility 100 through the trading management screen 711 and the trading management input unit 712, and processes to display the analysis result on the trading management screen 711.

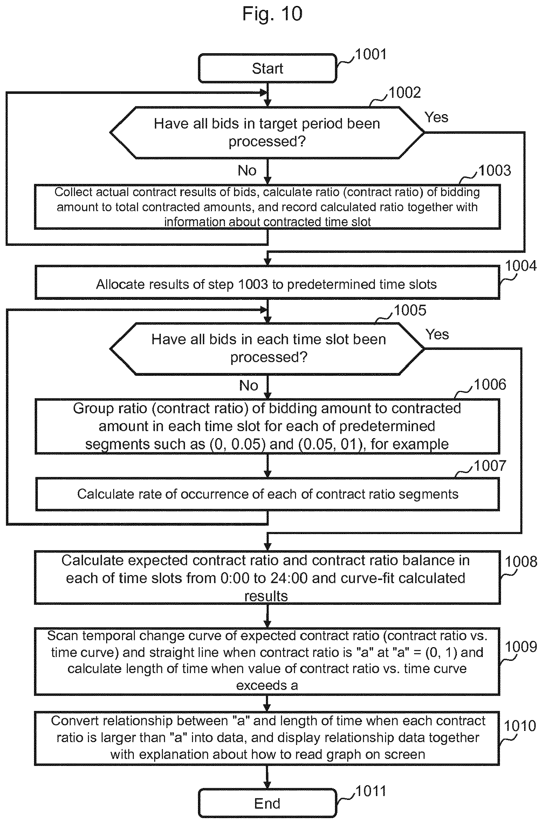

FIG. 10 is an example of a flowchart illustrating analysis procedure of the trading record management unit. The trading record management unit 710 starts a process corresponding to the above-described analysis command in step 1001. The processes in step 1002 to step 1003 are repeatedly performed for all of the bids in the target period. In step 1002, the trading record management unit 710 determines whether all of the bids in the target period have been processed. The process proceeds to step 1004 if positive determination result is obtained, and the process proceeds to step 1003 if negative determination result is obtained. The target period herein represents a period for analysis, and refers to a period of the most recent one year or January, for example. When the time slot recorded in the time slot 802 for bidding in the bidding records 800 shown in FIG. 8 and the time slot recorded in the time slot 902 for bidding of the bidding records 900 shown in FIG 9 are included in the target period, the information about the bidding records 800 and 900 is to be bidden.

In step 1003, the trading record management unit 710 collects the contract results for the bidding records 800 or 900, and calculates a ratio (contract ratio) of the bidding amount to the contracted amount (total contracted amount) based on the collected contract results. In the form shown in FIG. 8, the trading record management unit 710 calculates the ratio (contract ratio) of the bidding amount 803 to the contracted amount 805 using the contracted amount 805 recorded in the bidding records 800 and the information recorded in the status 807. In the form shown in FIG. 9, the trading record management unit 710 searches for the information about the result records (acceptance records) 920 and 921 stored in association with the bidding, calculates the total contracted amount by summing up the information about the contracted amounts 905, and calculates the ratio (contract ratio) of the bidding amount 903 to the total contracted amount. The trading record management unit 710 records, in a primary storage device and the like, each result in association with the information about the time slots 802 and 902 for bidding in the bidding records 800 and 900. When the processes of all of the bidding records 800 and 900 in the target period end, the trading record management unit 710 executes the process of step 1004. Note that when the "bidden" or "rest of sale" is recorded in the status 807 in the bidding records 800, this means that the contract has not been made. Therefore, in the example of FIG. 8, the information "NULL" is recorded in the contracted amount 805, but the contracted amount 805 is regarded as zero on calculation.

In step 1004, the trading record management unit 710 allocates and groups the results of step 1003 to the predetermined time slots. The "time slot" herein refers to, for example, the time slot in which the trading is executed (the time slot from 6 : 00 morning to 18:00 evening during a summer season, although depending on seasons, when the power generation facility 104 is a solar photovoltaic power generation, and 24 hours when the power generation facility 104 is wind power generation, hydraulic power generation, or power generation using geothermal heat, hot spring water, biogas, or the like). This time slot is divided into the units of 15 minutes, and the divided time slots are grouped. The grouped time slot may be further classified by adding the conditions such as weekday, and public holidays. By adding the information of precipitation and an amount of sunlight to the grouped time slot, the time slot may be combined with discretized segment of weather information and a day type, for example, precipitation of 0 to 2 mm and 15:00 to 15:15 on weekdays.

The processes in step 1005 to step 1007 are repeatedly performed for each of the time slots described in step 1004. In step 1005, the trading record management unit 710 determines whether all of the bids in each time slot have been processed. The process proceeds to step 1008 if positive determination result is obtained, and the process proceeds to step 1006 if negative determination result is obtained. In step 1006, the trading record management unit 710 groups the calculated results of the contract ratio included in each time slot at the predetermined contract ratio segments. The contract ratio segments are obtained by dividing into segments each having a constant width such as (0, 0.05), (0.05, 1.0), and the like, for example.

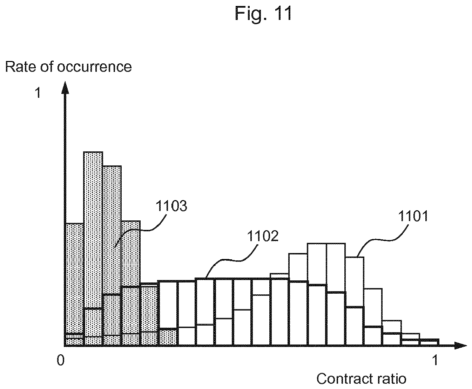

In step 1007 after step 1006, the trading record management unit 710 calculates a rate of records in the group (rate of occurrence of the contract ratio segment) to all of the records in the time slot, and records, in a temporary storage device and the like, the information about a set of the time slot, the contract ratio segment, and the rate of occurrence as the information about the calculation results, returns to the process of step 1005, and repeats the processes from step 1005 to step 1007. An example of the calculation results is shown in FIG. 11.

In FIG. 11, the horizontal axis represents the contract ratio, and the vertical axis represents the rate of occurrence. In the time slot 1103, the contract ratio shows tendency of being lower but the rate of occurrence shows tendency of being higher than in the other time slots 1102 and 1101. In the time slot 1102, the rate of occurrence shows tendency of being lower but the contract ratio shows tendency of being higher than in the time slots 1103. In the time slot 1101, the contract ratio shows tendency of being lower when the contract rate is lower and the rate of occurrence shows tendency of being higher when the contract rate is higher, as compared with in the time slot 1102.

In step 1008, the trading record management unit 710 calculates the expected contract ratios and the contract ratio balances in each of the time slots from 0 : 00 to 24 : 00 based on the contracted ratio segments and the rates of occurrence which are calculated for each of time slots, and curve-fits the calculated results (curve-fit the expected contract ratios and the contract ratio balances in the time direction). The fitting method is not limited to a particular method, and may be a fitting method in which the expected contract ratio and the contract ratio balance in a time slot may be connected to the expected contract ratios and the contract ratio balances in the adjacent time slots by polygonal lines, respectively. In the present embodiment, a curve regarding the expected contract ratios is referred to as a contract ratio vs. time curve, and a curve regarding the contract ratio balances is referred to as a contract ratio balance vs. time curve.

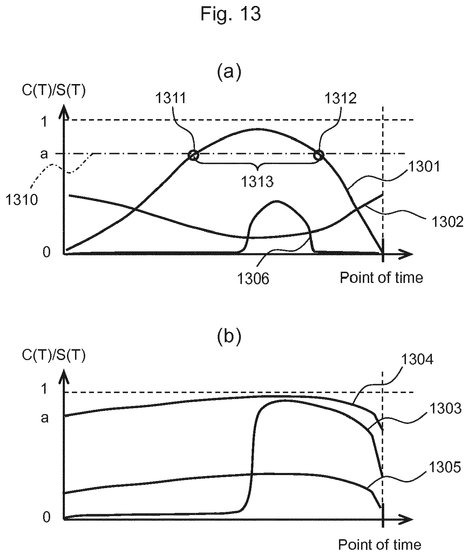

For supplementary description on step 1009, FIG. 13 shows an image of the contract ratio vs. time curve. The horizontal axis of each of FIGS. 13(a) and 13(b) represents a point-in-time, and the vertical axis thereof represents a target contract ratio. The contract ratio vs. time curves 1301 and 1302 shown in FIG. 13(a) and the contract ratio vs. time curve 1303 shown in FIG. 13(b) shows a type 3 having the time dependence of the contract ratio, and the contract ratio vs. time curves 1304 and 1305 shown in FIG. 13(b) shows a type having relatively low time dependence.

In step 1009, the trading record management unit 710 analyzes the results of step 1008. That is, the trading record management unit 710 scans the temporal change curve of the expected contract ratios (contract ratio vs. time curve) and a straight line when the contract ratio is equal to "a" at "a" = (0, 1), and calculates a length of time when a value of the contract ratio vs. time curve exceeds "a". More specifically, the trading record management unit 710 sets the target contract ratio "a" (0 < a < 1), assumes the straight line when the value is a (for example, a straight line 1310) for all of the time slots (x-axis), calculates intersection points 1311 and 1312 between this straight line 1310 and the contract ratio vs. time curve derived in step 1008, for example, the contract ratio vs. time curve 1301, calculates the length of time when the contract ratio vs. time curve 1301 is larger than the target contract ratio "a", using a difference 1313 between values in the time axis direction of two adjacent intersection points 1311 and 1312, and records the information about the calculated results in the primary storage device.

In step 1010, the trading record management unit 710 converts the relationship between a and the length of time when each contract ratio is larger than a based on the process result of step 1009 into data, displays the information converted into data together with explanation about how to read the graph on the trading management screen 711, and then ends the process in this routine in step 1011.

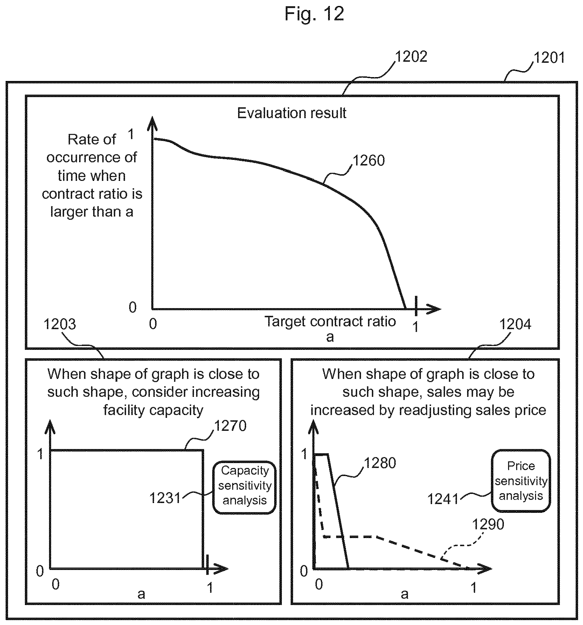

A display example of the trading management screen 711 is illustrated in FIG. 12. A display unit 1201 of the trading management screen 711 includes an evaluation result display unit 1202 and explanation display units 1203 and 1204. The vertical axis of the evaluation result display unit 1202 represents the result (the length of the time when the value of the contract ratio vs. time curve is larger than the target contract ratio "a") stored in step 1009 that is normalized to the length of the period for trading (the sunshine time slot when the power generation facility 104 is a solar photovoltaic power generation, for example, and 24 hours when the power generation facility 104 is wind power generation, for example), and represents as "rate of occurrence of time when the contract ratio is larger than "a"." The horizontal axis of the evaluation result display unit 1202 represents the target contract ratio "a" The evaluation results are displayed in a shape (characteristic) 1260 on the evaluation result display unit 1202.

The typical evaluation results are displayed in shapes (characteristics) 1270, 1280, and 1290 on the explanation display units 1203 and 1204. A capacity sensitivity analysis button 1231 and a price sensitivity analysis button 1241 as buttons for conducting the detailed evaluation is incorporated and displayed on the respective explanation display units 1203 and 1204 for the user interested in more specific evaluation, to enable the user to command the conduct.

The shape 1270 displayed on the explanation display unit 1203 represents the evaluation result is in a state close to a square. When the time slots in which the contract ratio is close to 1 make up a large proportion of the period for trading, that is, in a case of the contract ratio vs. time curve 1304 shown in FIG. 13(b), the height of the square becomes close to 1. When the contract ratio is a part of the time slots, the shape becomes close to a horizontally-long square as indicated in the contract ratio vs. time curve 1303 shown in FIG. 13(b). When the contract ratios are low in all of the time slots as indicated in the contract ratio vs. time curve 1305 shown in FIG. 13(b), the rising with respect to the target contract ratio "a" becomes close to "a"=0 as indicated in the shape 1280 of the typical results displayed on the explanation display unit 1204.

When the shape of the evaluation result is close to a regular square, this indicates that the bids are tendered in all of the target time slots at the affordable price and amount to meet the market needs, and there is a possibility that the power can be sold even when more bids are tendered.

When the shape of the evaluation result is a horizontally-long square, this indicates that the bids can be tendered in the specific target time slots at the affordable price, and the sales can be increased toward the specific time slots by mass selling shown in Embodiment 3 and Embodiment 4.

When the shape of the evaluation result becomes the trapezoidal shape 1280 or close to triangle, this indicates that the contract ratio vs. time curve corresponds to the shape like the contract ratio vs. time curves 1301 or 1302 shown in FIG. 13(a), and since the set price is slightly higher than the market price, there are time slots in which the contract cannot be established. When the shape of the evaluation result becomes the trapezoidal shape in which the upper side portion is lower than 1 as exemplified in the shape 1290, this indicates that the contract ratio vs. time curve corresponds to the shape like the contract ratio vs. time curves 1306 shown in FIG. 13(a), the market demand is limited to the specified time slots, and there is possibility that the set price itself is improper.

The buttons for commanding to perform the sensitivity analysis are provided on the screen for the user interested in the improvement based on such guidance information, the buttons being the capacity sensitivity analysis button 1231 and the price sensitivity analysis button 1241. Note that since the present invention is described on the assumption that the power generation facility is used in which a marginal cost is extremely close to zero like the regenerable energy, and loss on sales is not caused even when the power is sold at a low price, the contract ratio is preferably high. But, the optimality criterion depends on the user discretion. When the power generation facility is used in which the marginal cost is not close to zero, loss on sales is caused when the power is sold at a marginal cost or lower, and therefore high contract ratio does not become optimal. This also applied to a case where the rate of profit has priority. Accordingly, in the present embodiment, this point is committed to the guidance, but the sensitivity analysis process described later may be performed automatically.

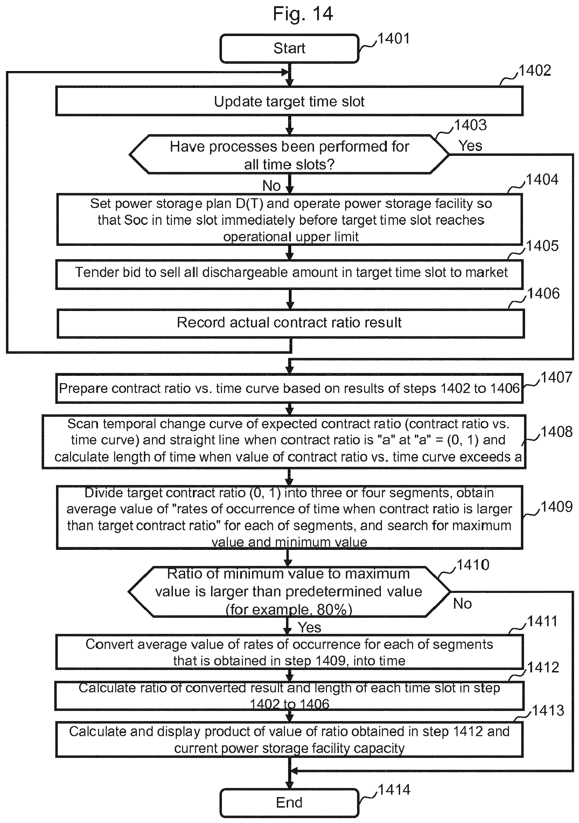

Next, a method of analyzing the sensitivity to the capacity of the facility will be described with reference to FIG. 14. For easier understanding of description, it should be noted that the process requires a plurality of days.

The trading record management unit 710 starts an analysis process of the sensitivity to the capacity of the facility (power storage facility 102) (step 1401), sets the time slot to be evaluated to update the target time slot (step 1402), and determines whether processes have been performed for all the time slots (step 1403). The trading record management unit 710 proceeds to step 1407 if positive determination result is obtained in step 1403, and proceeds to step 1404 if negative determination result is obtained in step 1403.

In step 1404, the trading record management unit 710 sets the power storage plan D(T) and operates the power storage facility 102, so that SoC in the time slot immediately before the target time slot reaches an operational upper limit, and proceeds to the process of step 1405. At this time, the trading record management unit 710 operates in a method described in Embodiment 4.

Next, in step 1405, the trading record management unit 710 tenders a bit to sell all dischargeable amount in the target time slot to the market (trading market 140) in the method described in Embodiment 3, and proceeds to the process of step 1406.

In step 1406, the trading record management unit 710 calculates the contract ratio (contracted ratio result) based on the result of the bidding (including rest of sale without being contracted), records the information indicating the result, returns to step 1402, and repeat the processes from step 1402 to step 1406.

Next, when the trading record management unit 710 determines that the processes have been completed for all the time slots, the trading record management unit 710 prepares the data of the contract ratio vs. time curve based on the results of steps 1402 to step 1406 (step 1407). Since these results are not necessarily presented to the user, these results are described as data of the contract ratio vs. time curve, but these results may be displayed.

The trading record management unit 710 scans the contract ratio vs. time curve and the straight line when the contract ratio is equal to "a" at "a" = (0, 1), and calculates a length of the time when a value of the contract ratio vs. time curve exceeds "a" (step 1408). That is, in step 1408, the trading record management unit 710 scans the target contract ratio in a range from 0 to 1 with respect to the contract ratio vs. time curve, and calculates a length of the time when the contract ratio of the contractive ratio vs. time curve exceeds each target contract ratio. The time length with respect to each target contract ratio may be the rate of occurrence that is a rate to the entire length of time (period for the trading) for the trading. This process can be performed similarly to the description of step 1009 in FIG. 10.

In step 1409, the trading record management unit 710 divides the defined region of 0 to 1 of the target contract ratio into three or four segments, obtains an average value of the rates of occurrence of the time when the contract ratio exceeds the target contract ratio for each of the segments, and searches for the maximum value and the minimum value (step 1409). Then, the trading record management unit 710 obtains the ratio of the maximum value and the minimum value, and determines whether the ratio is larger than a predetermined value (for example, 80%) (step 1410). This process is one example of the process for determining whether each of the shapes displayed on the evaluation result display unit 1202 and the explanation display units 1203 and 1204 is close to square or triangle, and is not necessarily limited to a method of the process in the example in which the segment division is made to obtain the ratio of the maximum value and the minimum value. The number of segment divisions is 3 or 4 as an example, but the number is not limited to such a value.

When the trading record management unit 710 obtains the negative determination result in step 1410, that is, determines, in step 1410, that the ratio is smaller than the predetermined value, since this corresponds to the strong time dependence like the contract ratio vs. time curves 1301, 1302, and 1306, the process proceeds to the process of step 1414 without presenting the guidance regarding change in the facility capacity for power storage and power generation, and then ends the process in this routine. To end the process, the result in which the guidance for the facility capacity is difficult may be displayed.

On the other hand, when the trading record management unit 710 obtains the positive determination result in step 1410, that is, determines, in step 1410, that the ratio is larger than the predetermined value, the trading record management unit 710 obtains an average value of the rates of occurrence for each segment that are obtained in step 1409, and converts the average value into the time using the time length of the period for trading (step 1411).

Next, the trading record management unit 710 calculates the ratio of converted result in step 1411 and the length of each time slot used in steps 1402 to 1406 (step 1412). Thereby, the trading record management unit 710 can calculate how much power can be traded in a full capacity state of the power storage facility 102 which is reached at which number time frame of each trading time slot included in the period for trading.

Finally, the trading record management unit 710 calculates a product of a value of the ratio obtained in step 1412 and the current power storage facility capacity, and displays the calculated result on the trading management screen 711 (step 1413), and then proceeds to step 1414, and ends the process in this routine.

In step 1413, by performing such a process, for example, a facility capacity enabling the bid for trading a power amount that may be expected to obtain a fixed contracted ratio in the period for trading (for example, 24 hours, or 12 hours in daytime) can be estimated and presented.

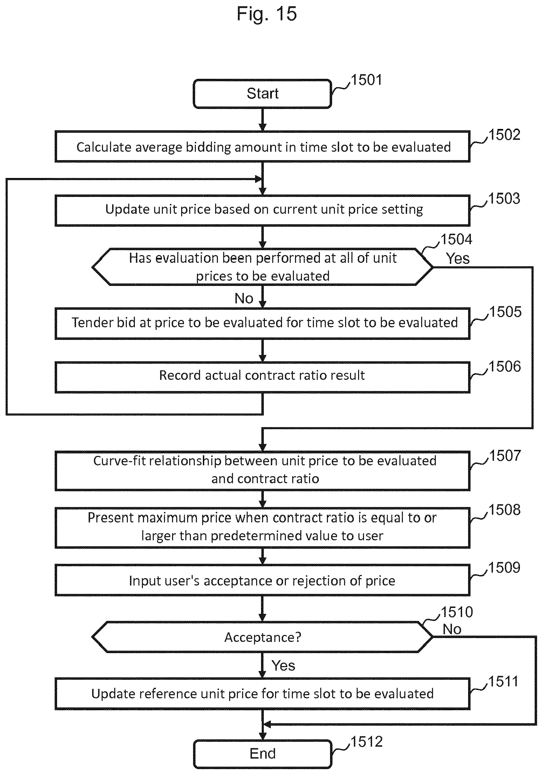

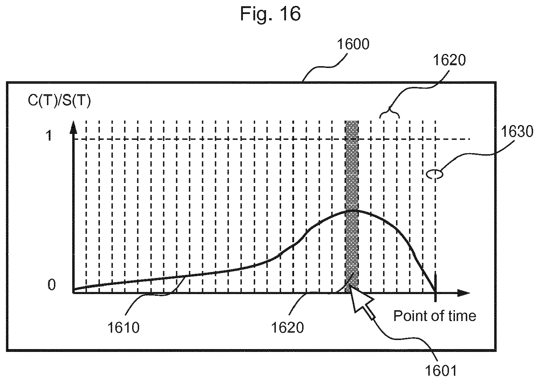

Next, a method of analyzing the sensitivity to the price will be described with reference to FIG. 15. The trading record management unit 710 starts processes of a method of analyzing the sensitivity to the price (step 1501), and calculate an average value (average bidding amount) of the past bidding results in the target time slots (step 1502). Note that the target time slots are set on an interface screen shown in FIG. 16, for example.

On the interface screen 1600, the contract ratio vs. time curve 1610, the time slots for trading included in the period for trading, for example, the time slot 1620, and dashed lines 1630 each indicating a boundary line between time slots are displayed. To set the target time slot, the time slot 1620 specified by a mouse sole 1601 is highlighted according to the movement of the mouse sole 1601, so that the target time slot is determined by clicking the mouse.

This is only an example. The time slot in which the average contract ratio is equal to or less than the predetermined value in each time slot included in the period for trading is set as a time slot for trading, and the processes shown in FIG. 15 may be automatically executed.

The trading record management unit 710 updates a unit price at intervals of 0.1 steps from 0.9 times to 0.5 times, for example, based on the current unit price, and determines the unit price to be evaluated (step 1503).

Next, the trading record management unit 710 determines whether the evaluation has been performed at all of the unit prices to be evaluated (step 1504). The trading record management unit 710 proceeds to step 1507 if positive determination result is obtained in step 1504, and the bid is tendered at the unit price to be evaluated in the time slot for evaluation if negative determination result is obtained in step 1504 (step 1505). If there is a price to be evaluated that has not been evaluated yet, for example, the bid is tendered at the price to be evaluated at the average bidding amount calculated in step 1502. The bid is tendered based on the operation in the method described in Embodiment 3 so that the bidding amount is kept constant, regardless of the power generation amount and load (load consumption amount).

Next, the trading record management unit 710 calculates the contract ratio result to the price based on the trading result for each of the prices to be evaluated, and records, in a temporary storage device, the information indicating the calculated result (step 1506), returns to the step 1503, and repeats the processes from step 1503 to step 1506.

On the other hand, when the trading record management unit 710 determines in step 1504 that the evaluation has been performed at all of the unit prices to be evaluated, that is, when the evaluation for all of the unit prices has been completed, the relationship between the price to be evaluated and the contract ratio is curve-fitted (step 1507).

Next, the trading record management unit 710 calculates the maximum price when the contract ratio is equal to or larger than the predetermined value, based on the processed result in step 1507, present the calculated result to the user through the trading management screen 711 (step 1508), and inputs the information indicating user's acceptance or rejection of the price setting (step 1509), and determines acceptance or rejection (step 1510).

When the trading record management unit 710 obtains the negative determination result in step 1510, the trading record management unit 710 proceeds to step 1512, and ends the process in this routine. When the trading record management unit 710 obtains the positive determination result in step 1510, that is, in the case of acceptance, the trading record management unit 710 updates the trading unit price (reference unit price) in the time slot to be evaluated to the accepted value (step 1511), and then ends the process in this routine (step 1512).

Note that according to an effect of the present invention, the presentation to the user and the acceptance input are not necessarily required in step 1508 to step 1510, but the process relating to the money such as the trading unit price may typically require user's acceptance, in many cases. Therefore, this is described as steps of the present embodiment.

Thus, the trading price can be automatically improved. Note that when there is no price to obtain the predetermined contract ratio or more in step 1508, the unit price evaluation range set in step 1503 may be set to cheaper prices, to be evaluated again. Alternatively, the trading may not be executed in this time period.

According to the present embodiment, the information indicating the facility capacity or the facility price (facility capacity or facility price of the power storage unit relating to the trading amount with the trading market) capable of increasing the trading amount by analyzing the contract results of the trading and based on the contract ratio indicating the ratio of the bidding amount and the contracted amount can be displayed on the trading management screen (display unit), and thereby the facility capacity or the facility price capable of the trading amount can be presented to the user.

Note that the present invention is not limited to the above-described embodiments, and includes various modification examples. For example, the above-described embodiments have been explained for easily understanding the present invention, but are not always limited to the one including all configurations explained above. Furthermore, another configuration can be added to, eliminated from, or replaced with a part of the configuration of each embodiment.

Additionally, part or all of configurations, functions, etc. as described above may be achieved by hardware through, for example, design etc. of an integrated circuit. Furthermore, each of configuration and functions, etc. may be achieved, by software through interpretation and execution of a program by a processor for achieving the respective functions. Information on programs, tables, files, etc. can be stored in recording devices such as a memory, hard disk, and an SSD (Solid State Drive), or recording media such as an IC (Integrated Circuit) card, an SD (Secure Digital) memory card, and a DVD (Digital Versatile Disc).

**Claims**

**1.** A power trading system, comprising:

a power generation means for generating power;
a power storage means for storing the power generated by the power generation means; and
a power trading means for transmitting and/or receiving information to and/or from a trading market to conduct power trading,
wherein the power trading means tenders a bid for at least part of sellable power to the trading market on condition that the sellable power has been stored in the power storage means.

2. The power trading system according to claim 1, further comprising:

a power storage control means for controlling the power storage means as a controlled object;
a generated power amount measuring means for measuring a generated power amount indicating an amount of power generated by the power generation means; and
a load detection means for measuring a power consumption amount of a load that consumes the power stored in the power storage means and outputting a measurement result to the power trading means as a load amount, wherein, upon receipt of information about a contracted power amount indicating a contract result of a past bid from the power trading market before trading with the trading market, the power trading means outputs a first power storage command to the power storage control means, the first power storage command having, as a controlled variable for the power storage control means, a power amount obtained by subtracting the contracted power amount from a surplus power amount, the surplus power amount being a difference between the generated power amount measured by the generated power amount measuring means and the load amount detected by the load detection means, and tenders a bid for the surplus power amount to the trading market on condition that control has been executed by the power storage control means, and
the power storage control means controls an amount of the power stored in the power storage means based on the first power storage command.

3. The power trading system according to claim 1, further comprising:

a power storage control means for controlling the power storage means as a controlled object,
wherein, upon receipt of information about a contracted power amount indicating a contract result of a past bid from the power trading market before trading with the trading market, the power trading means outputs a second power storage command to the power storage control means, the second power storage command having the contracted power amount as a controlled variable for the power storage control means, and tenders a bid for a power amount indicating a sum of an amount of the power stored in the power storage means under control of the power storage control means and the contracted power amount, to the trading market on condition that the control has been executed by the power storage control means, and
the power storage control means controls an amount of the power stored in the power storage means based on the second power storage command.

4. The power trading system according to claim 1, further comprising:

a power storage control means for controlling the power storage means as a controlled object,
wherein, upon receipt of information about a contracted power amount indicating a contract result of a past bid from the power trading market before trading with the trading market, the power trading means outputs a second power storage command to the power storage control means, the second power storage command having the contracted power amount as a controlled variable for the power storage control means, and tenders a bid for a power amount indicating a product of a rated capacity of the power storage means and a difference between an amount of the power stored in the power storage means and an operational stored power amount of the power storage means or a value representing performance of the power storage means, whichever is smaller, on condition that control has been executed by the power storage control means, and
the power storage control means controls an amount of the power stored in the power storage means based on the second power storage command.

5. The power trading system according to claim 1, further comprising:

a power storage control means for controlling the power storage means as a controlled object,
wherein, upon receipt of information about a contracted power amount indicating a contract result of a past bid from the power trading market before trading with the trading market, the power trading means outputs a second power storage command to the power storage control means, the second power storage command having the contracted power amount as a controlled variable for the power storage control means, and tenders a bid for a power amount obtained by subtracting planned power storage amount from a sum of an amount of the power stored in the power storage means and the contracted power amount, to the trading market on condition that the control has been executed by the power storage control means, and

the power storage control means controls an amount of the power stored in the power storage means based on the second power storage command.

6. The power trading system according to claim 1, further comprising:

a power storage control means for controlling the power storage means as a controlled object;

a generated power amount measuring means for measuring a generated power amount indicating an amount of power generated by the power generation means; and

a load detection means for measuring a power consumption amount of a load that consumes the power stored in the power storage means and outputting a measurement result to the power trading means as a load amount, wherein, upon receipt of information about a contracted power amount indicating a contract result of a past bid from the power trading market before trading with the trading market, the power trading means outputs a second power storage command to the power storage control means, the second power storage command having the contracted power amount as a controlled variable for the power storage control means, and tenders a bid for a power amount obtained by subtracting the planned power storage amount from a surplus power amount, the surplus power amount being a difference between the generated power amount measured by the generated power amount measuring means and the load amount detected by the load detection means, to the trading market on condition that control has been executed by the power storage control means, and

the power storage control means controls an amount of the power stored in the power storage means based on the second power storage command.

7. The power trading system according to any one of claims 3 to 6, further comprising:

a received power amount measuring means for measuring a received power amount at an interconnection point connecting a distribution line coupled to a load that consumes the power stored in the power storage means and a power system,

wherein the power storage control means controls an amount of the power stored in the power storage means based on the second power storage command.

8. The power trading system according to any one of claims 3 to 6, further comprising:

a power storage state monitoring means for monitoring a power storage state of the power storage means and outputting a monitoring result to the power trading means; and

a load restraining means for reducing a power consumption amount of a load that consumes the power stored in the power storage means based on a load restraining command from the power trading means,

wherein, when the power storage state of the power storage means falls below a set value based on the monitoring result from the power storage state monitoring means, the power trading means outputs the load restraining command to the load restraining means.

9. The power trading system according to any one of claims 3 to 6, further comprising:

a preliminary load that consumes the power stored in the power storage means based on a preliminary load start command from the power trading means; and

a power storage state monitoring means for monitoring a power storage state of the power storage means and output a monitoring result to the power trading means,

wherein, when the power storage state of the power storage means exceeds a set value based on the monitoring result from the power storage state monitoring means, the power trading means outputs the preliminary load start command to the preliminary load.

10. The power trading system according to any one of claims 3 to 6, further comprising:

a trading record management means for transmitting and/or receiving information to and/or from the power trading means; and

a display means for displaying information as a controlled object of the trading record management means,

wherein the trading record management means calculates a ratio of a bidding amount used for the bid to the trading market and a contracted amount representing the contracted power amount that is contracted in the trading market, and displays, on the display means, information indicating a facility capacity of the power storage means or a facility price relating to a trading amount with the trading market based on a calculated result, the information being generated by the power trading means.

11. A power trading method for a power trading system, the power trading system comprising:

a power generation means for generating power;
a power storage means for storing the power generated by the power generation means; and
a power trading means for transmitting and/or receiving information to and/or from a trading market to conduct power trading,
the method comprising:
a step of tendering a bid for at least part of sellable power to the trading market on condition that the sellable power has been stored in the power storage means.

Fig. 1

# Fig. 2

EP 3 573 010 A1

Fig. 3

Fig. 4

Fig. 5

Fig. 6

Fig. 7

## Fig. 8

| Bidding point in time (801) | Time slot for bidding (802) | Bidding amount (803) | Bidding price (804) | Contracted amount (805) | Contracted price (806) | Status (807) |
|---|---|---|---|---|---|---|
| 8:03:15 | 8:15-8:20 | 0.8KWh | 3¥/kWh | NULL | NULL | Bidden |

800

## Fig. 9

| Unique ID (908) | Bidding point in time (901) | Time slot for bidding (902) | Bidding amount (903) | Bidding price (904) | Status (907) |
|---|---|---|---|---|---|
| 10001102 | 8:03:15 | 8:15-9:00 | 5.5KWh | 3¥/kWh | Partially contracted |

900

| Unique ID for bidding (918) | Unique ID for acceptance (928) | Time slot for successful bid (912) | Contracted amount (905) | Contracted price (906) |
|---|---|---|---|---|
| 10001102 | 001 | 8:15-8:25 | 2kWh | 3.5¥/kWh |
| 10001102 | 002 | 8:20-8:30 | 3kWh | 3.2¥/kWh |

920
921

## Fig. 10

Start — 1001

Have all bids in target period been processed? — 1002

Yes

No

Collect actual contract results of bids, calculate ratio (contract ratio) of bidding amount to total contracted amounts, and record calculated ratio together with information about contracted time slot — 1003

Allocate results of step 1003 to predetermined time slots — 1004

Have all bids in each time slot been processed? — 1005

Yes

No

Group ratio (contract ratio) of bidding amount to contracted amount in each time slot for each of predetermined segments such as (0, 0.05) and (0.05, 01), for example — 1006

Calculate rate of occurrence of each of contract ratio segments — 1007

Calculate expected contract ratio and contract ratio balance in each of time slots from 0:00 to 24:00 and curve-fit calculated results — 1008

Scan temporal change curve of expected contract ratio (contract ratio vs. time curve) and straight line when contract ratio is "a" at "a" = (0, 1) and calculate length of time when value of contract ratio vs. time curve exceeds a — 1009

Convert relationship between "a" and length of time when each contract ratio is larger than "a" into data, and display relationship data together with explanation about how to read graph on screen — 1010

End — 1011

Fig. 11

Fig. 12

Fig. 13

(a)

(b)

## Fig. 14

```
                    ┌─────────────┐  ╭1401
                    │    Start    │
                    └──────┬──────┘
                           │
   ┌───────────────────────▼──────────────────────────┐  ╭1402
   │              Update target time slot              │
   └───────────────────────┬──────────────────────────┘
                           │                      ╭1403
              ┌────────────▼─────────────┐
             ╱  Have processes been performed for ╲    Yes
            ╱        all time slots?               ╲────────┐
             ╲                                     ╱        │
              └────────────┬─────────────┘                 │
                        No │                      ╭1404     │
   ┌───────────────────────▼──────────────────────────┐    │
   │ Set power storage plan D(T) and operate power     │    │
   │ storage facility so that Soc in time slot         │    │
   │ immediately before target time slot reaches       │    │
   │ operational upper limit                           │    │
   └───────────────────────┬──────────────────────────┘    │
                           │                      ╭1405     │
   ┌───────────────────────▼──────────────────────────┐    │
   │ Tender bid to sell all dischargeable amount in    │    │
   │ target time slot to market                        │    │
   └───────────────────────┬──────────────────────────┘    │
                           │                      ╭1406     │
   ┌───────────────────────▼──────────────────────────┐    │
   │         Record actual contract ratio result      │    │
   └───────────────────────┬──────────────────────────┘    │
           └───────────────┘                               │
```

- **1401** Start
- **1402** Update target time slot
- **1403** Have processes been performed for all time slots? — Yes / No
- **1404** Set power storage plan D(T) and operate power storage facility so that Soc in time slot immediately before target time slot reaches operational upper limit
- **1405** Tender bid to sell all dischargeable amount in target time slot to market
- **1406** Record actual contract ratio result
- **1407** Prepare contract ratio vs. time curve based on results of steps 1402 to 1406
- **1408** Scan temporal change curve of expected contract ratio (contract ratio vs. time curve) and straight line when contract ratio is "a" at "a" = (0, 1) and calculate length of time when value of contract ratio vs. time curve exceeds a
- **1409** Divide target contract ratio (0, 1) into three or four segments, obtain average value of "rates of occurrence of time when contract ratio is larger than target contract ratio" for each of segments, and search for maximum value and minimum value
- **1410** Ratio of minimum value to maximum value is larger than predetermined value (for example, 80%) — Yes / No
- **1411** Convert average value of rates of occurrence for each of segments that is obtained in step 1409, into time
- **1412** Calculate ratio of converted result and length of each time slot in step 1402 to 1406
- **1413** Calculate and display product of value of ratio obtained in step 1412 and current power storage facility capacity
- **1414** End

Fig. 15

Start ⟋1501

Calculate average bidding amount in time slot to be evaluated ⟋1502

Update unit price based on current unit price setting ⟋1503

Has evaluation been performed at all of unit prices to be evaluated ⟋1504 Yes

No

Tender bid at price to be evaluated for time slot to be evaluated ⟋1505

Record actual contract ratio result ⟋1506

Curve-fit relationship between unit price to be evaluated and contract ratio ⟋1507

Present maximum price when contract ratio is equal to or larger than predetermined value to user ⟋1508

Input user's acceptance or rejection of price ⟋1509

Acceptance? ⟋1510 No

Yes

Update reference unit price for time slot to be evaluated ⟋1511

End ⟋1512

## Fig. 16

Europäisches
Patentamt

European
Patent Office

Office européen
des brevets

# EUROPEAN SEARCH REPORT

Application Number

EP 19 17 3630

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2016 083959 A (TOYOTA MOTOR CORP) 19 May 2016 (2016-05-19) * the whole document * & US 2018/240201 A1 (EDA TAKAYUKI [JP] ET AL) 23 August 2018 (2018-08-23) ----- | 1-11 | INV. G06Q40/04 G06Q50/06 |

TECHNICAL FIELDS
SEARCHED       (IPC)

G06Q

The present search report has been drawn up for all claims

| Place of search | Date of completion of the search | Examiner |
|---|---|---|
| The Hague | 20 September 2019 | Lutz, Andreas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 ...............................................................................

& : member of the same patent family, corresponding
document

EPO FORM 1503 03.82 (P04C01)

# EP 3 573 010 A1

## ANNEX TO THE EUROPEAN SEARCH REPORT
## ON EUROPEAN PATENT APPLICATION NO.

EP 19 17 3630

This annex lists the patent family members relating to the patent documents cited in the above-mentioned European search report.
The members are as contained in the European Patent Office EDP file on
The European Patent Office is in no way liable for these particulars which are merely given for the purpose of information.

20-09-2019

| Patent document cited in search report | Publication date | Patent family member(s) | Publication date |
|---|---|---|---|
| JP 2016083959 A | 19-05-2016 | CN 105539113 A<br>DE 102015219922 A1<br>JP 6032258 B2<br>JP 2016083959 A<br>US 2016114699 A1 | 04-05-2016<br>28-04-2016<br>24-11-2016<br>19-05-2016<br>28-04-2016 |

**EP 3 573 010 A1**

**Patent documents cited in the description**

- JP 2017153274 A